# EUROPEAN PATENT SPECIFICATION

(11) **EP 3 488 961 B1**
(45) Date of publication and mention of the grant of the patent: **29.10.2025**
(21) Application number: 18207874.1
(22) Date of filing: 22.11.2018
(51) Int. Cl.: B23K 26/06, B23K 26/067, B23K 26/08, B23K 26/38, B23K 26/0622, B23K 103/00

(54) **MULTIPLE LASER PROCESSING FOR BIOSENSOR TEST STRIPS**
MEHRFACH-LASERBEARBEITUNG FÜR BIOSENSOR-TESTSTREIFEN
TRAITEMENT MULTIPLE AU LASER POUR DES BANDES DE TEST DE BIOCAPTEUR

(30) Priority: 22.11.2017 US 201715820691
(43) Date of publication of application: 29.05.2019
(73) Proprietor: Roche Diabetes Care GmbH, 68305 Mannheim (DE); F. Hoffmann-La Roche AG, 4070 Basel (CH)
(72) Inventor: Robinson, Brett David, Carmel, IN Indiana 46032 (US); Austera, John T., Indianapolis, IN Indiana 46236 (US)
(74) Representative: J A Kemp LLP

(56) References cited:
- EP-A1- 1 218 732
- EP-B1- 1 218 732
- EP-B1- 1 971 460
- WO-A2-2012/006736
- KR-A- 20160 146 483
- US-A1- 2002 072 124
- US-A1- 2007 215 582
- US-A1- 2014 042 024
- US-B2- 9 535 028

## Description

### TECHNICAL FIELD

The present disclosure relates to the field of manufacture of biosensors and, in particular, to methods for forming slits in biosensor film materials, particularly involving the use of multiple laser beams to slit the film material and to biosensor test strips produced by such methods.

### BACKGROUND

Biosensor test strips are typically formed as a series of biosensor test elements on a relatively thin, continuous film material. The film material facilitates the handling of the test strips while various test strip features are provided. Providing these features may include, for example, the steps of the formation of electrodes and the application of reagents. The continuous film material is subsequently divided into individual test strips. In this process, the line of division of the test strips may be quite close to relatively sensitive test components, such as the electrodes and reagent. It is therefore desirable to perform this separation with precision and minimum disruption, while also having relatively high processing speeds.

There may also be a desire to cut off an end portion, such as at the dosing end, of a test strip to provide desired edge properties. In that circumstance, it is desirable to provide specified edge characteristics, without damaging the test components.

It has been conventional to mechanically slit biosensor film materials to separate the test strips. However, film deflection during this slitting operation may cause reagent layers and electrodes to crack. Reagent and electrode cracking may lead to variation in test strip performance, resulting in inaccurate test results or failed tests indicated by error codes on a meter. The film deflection may also deform the physical shape of the test strip, which could for example affect dosing or capillary transport of a test sample to the testing site. Moreover, problems with the slitter blades during set-up or batch processing can lead to increased manufacturing cost due to yield loss, production delays, quality checks, and the like.

In one approach, test strips are formed in a "2-up" process. In this process, a single film material is used to form two series of test elements on opposite sides of a centerline extending between what will be the dosing ends of the test strips. Separating these two series of test elements along the centerline requires cutting the film material in the narrow space between the opposed test elements. In certain situations, the working area of the biosensors is located adjacent to and on opposing sides of the cut line. A mechanical slitting process therefore has a narrow operating window where the slitter blade and film interaction must be carefully controlled. When slitting and separating a 2-up film into two products, the mechanical slitter blade also may produce opposing products with slightly asymmetrical cut edge geometry and different reagent layer cracking patterns. This may result in strip performance differences in product generated on opposing sides of the blade.

Laser slitting has been known for dividing biosensor test strips formed on a continuous film material. The use of lasers to some extent addresses problems associated with mechanical slitting of biosensors by avoiding film deflection, providing improved edge geometry, and minimizing reagent layer cracking. However, slitting completely through a film material can be detrimental to product performance when the reagent layer is heated, and/or debris produced by the laser cutting is deposited on the reagent surface.

The methods provided herein are intended to address some or all of the above problems.

WO 2012/006736 A2 discloses a method of material processing by laser filamentation. KR 20160146483 discloses a processing method of optical film. US 2014/0042024 Al discloses electrical patterns for biosensor and method of making. WO 01/25775 A1 discloses patterned laminates and electrodes with laser defined features. US 2007/0215582 A1 forms the basis for the preamble of claim 1 and discloses a method for production of a mufti-layer analysis element. US 2002/0072124 Al discloses methods of manufacturing reagent test strips

### SUMMARY

According to the present invention, there is provided a method of slitting a polymeric film material of a biosensor test strip, the film material including a working surface with working components and an opposed bottom surface, comprising: moving the film material relative to a working surface laser beam directed against the working surface of the film material; making a working surface laser cut of the film material using the working surface laser beam; and separating the first portion of the film material from the second portion of the film material; characterized in that: the moving the film material is relative to a bottom laser beam directed against the bottom surface of the film material; the working surface laser beam and the bottom laser beam are provided by separate lasers, wherein the bottom laser beam is a CO₂ laser beam and the working surface laser beam is a UV laser beam; the method further comprises making a bottom laser cut partially into the bottom surface of the film material to a first depth using the bottom laser beam, the bottom laser cut defining first and second portions of the film material on opposite sides of the bottom laser cut; the working surface laser cut of the film material is made to be aligned with the bottom laser cut; wherein the working surface laser cut and the bottom surface laser cut intersect; the bottom laser cut is deeper
than the working surface laser cut; and the working surface laser beam operates based more on photoablation of kerf material than on thermal interaction; and the bottom surface laser beam operates based more on thermal interaction than on photoablation of kerf material.

It is an object of the present invention to provide a method which reduces substrate deflection during test element singulation to form test strips and which therefore results in less reagent and electrode cracking.

Another object of the invention is to cut biosensor test strips with reduced damage to reagents, electrodes, structural members and other components of the biosensor test strips.

It is a further object of the present invention to provide a method for cutting biosensor test strips with minimized kerf width, a smaller heat affected zone (HAZ), lower recast, and reduced deposit of debris on the working surface of a biosensor test strip.

Also provided herein is a slit film material obtainable by slitting a film material using the methods provided herein.

Also provided herein is a biosensor test strip comprising a slit film material obtainable using the methods provided herein.

Also provided herein is an apparatus for carrying out the methods provided herein.

Further forms, objects, features, aspects, benefits, advantages, and embodiments of the present invention will become apparent from a detailed description and drawings provided herewith.

### BRIEF DESCRIPTION OF THE DRAWINGS

FIG. 1 is a diagram of a process for cutting biosensor test strips using bottom and working surface laser beams in accordance with the present invention.
FIG. 2 is a side view showing the profile of the laser cuts achieved using the process of FIG. 1.
FIG. 3 is a perspective view showing a film material that has been divided into two portions.
FIG.4 is a side view of an initial working surface laser cut into a film material using the present invention.
FIG. 5 is a side view of the film material of FIG. 4 after having been laser cut a second time to a greater depth than the initial depth.
FIG. 6 is a side view of the film material of FIG. 5 after having been laser cut to a still further depth.
FIG. 7 is a diagram showing the present invention employing multiple beam cutting of the working surface of a film material.
FIG. 8 is a diagram showing the present invention employing multiple beam cutting of both the working surface and the bottom surface of a film material.

### DETAILED DESCRIPTION

For the purpose of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as defined by the appended claims.

Provided herein are methods for producing biosensor test strips in quantity and at rapid rates. Each test strip includes a bottom surface on one side, and a working surface on the other side. The term "working surface" refers to a surface of a test strip substrate containing various test components, such as the dosing location for receiving analyte samples, the sample receiving chamber, the capillary passageway leading from the dosing location to the sample receiving test chamber, and the electrodes and reagent positioned within the test chamber. Preferably, the test strips are produced by forming a number of working surfaces on one side of a continuous film material, and then dividing the film material into individual test strips. More preferably, the bottom surface also includes working components.

The individual test strips are separated from the continuous film material by laser cutting the film material. The methods provide separate, controlled-depth cutting of the opposed bottom and working surfaces of the film material using at least a bottom laser beam and a working surface laser beam. The bottom laser beam is used to partially cut into the bottom surface of the film material. The working surface laser beam is used to cut into the working surface. The bottom and working surface laser beams come from two separate lasers. The cuts may be made in a single pass or in multiple passes.

Laser cutting, in general, works by passing the output of a high-power laser through optics which are used to direct the laser beam against the material to be cut. The focused laser beam is directed at the material, which then either melts, burns, vaporizes, or is blown away by a jet of gas. Material removal can occur via photothermal interaction and/or photoablation depending on laser and material type. Along with the removal of material, laser cutting has several attendant consequences. For example, the amount of material removed, the "kerf", will vary, impacting the character of the resulting edge surface such as smoothness, and angle and depth of the cut. The laser beam also will heat the surrounding material, which may result in recast and/or affect the integrity or nature of the surrounding material including nearby electrodes and reagent.

There are several types of lasers currently used in laser cutting, including CO₂ lasers, UV lasers, neodymium (Nd)-based lasers and other semiconductor based solid state lasers. Each type of laser provides a different quality of cut for a given film material. Moreover, each type of laser is operable at varying parameters, which also provide differing cuts. The laser providing the bottom laser beam is of a different type than the laser providing the working surface laser beam. The processes utilize a CO₂ laser, optionally a pulsed CO₂ laser, to provide the bottom laser beam, and a UV laser, optionally a picosecond ("PS") UV laser, to provide the working surface laser beam.

The inventive methods preferably utilize laser beams in which the bottom laser beam is relatively "coarse" as compared to the working surface laser beam, which is a relatively more "fine" laser beam. The term "coarse" as used herein with respect to a laser or laser beam is a relative term. A coarse laser beam is one which results in less controlled or less desired characteristics of the produced cut. For example, a coarse laser may produce a wider kerf, a shallower cut angle, a larger HAZ, more recast, and/or more debris as compared to a "fine" laser beam. A coarse laser beam, as compared to a fine laser beam, may also be more likely to damage the working surface components.

The processes provide for a significant portion of the cutting of the film material to use a "coarse" laser system on the bottom surface without the bottom laser cut extending through to the other side of the film material. The laser cut on the bottom surface only extends part way into the film material, and therefore does not present the laser beam directly against or adjacent to the working surface. The rough bottom cut thus presents reduced risks to the components on the working surface since the cut does not go all the way through the film material.

The bottom, coarse laser preferably operates under conditions that are more severe than for the working surface laser. This provides advantages in that the bottom laser beam cuts a major portion of the thickness of the test strip, leaving less thickness for the working surface laser beam to cut. The bottom laser beam accordingly preferably operates at a faster material removal rate (material volume per unit time), creates a larger kerf width, has a larger HAZ, and results in a higher debris and recast than the working surface laser beam.

In contrast, the working surface laser preferably uses a "fine" laser beam for cutting into the working surface of the film material. The working surface laser preferably operates under conditions which create less disruption to the test strip substrate and the components of the working surface. For example, the fine laser beam preferably operates at a lower material removal rate, creates a narrower kerf, has a smaller HAZ, and results in lower debris and recast than the bottom laser.

With the understanding that the material removal rates are typically different for the coarse and fine laser beams, film processing speeds can be maximized by optimizing relative laser beam cut depths. The processes thereby allow for the rapid and efficient production of test strips while yielding test strips for which the components of the working surface have improved properties. The components typically, for example, are more uniform in structure and function, have improved integrity, and provide more accurate test results. Further, the test strips typically have improved edge smoothness and cut angle. Less variability occurs than when mechanical slitting causes deflection of the film material during cutting.

### Example of the General Concept of the Invention

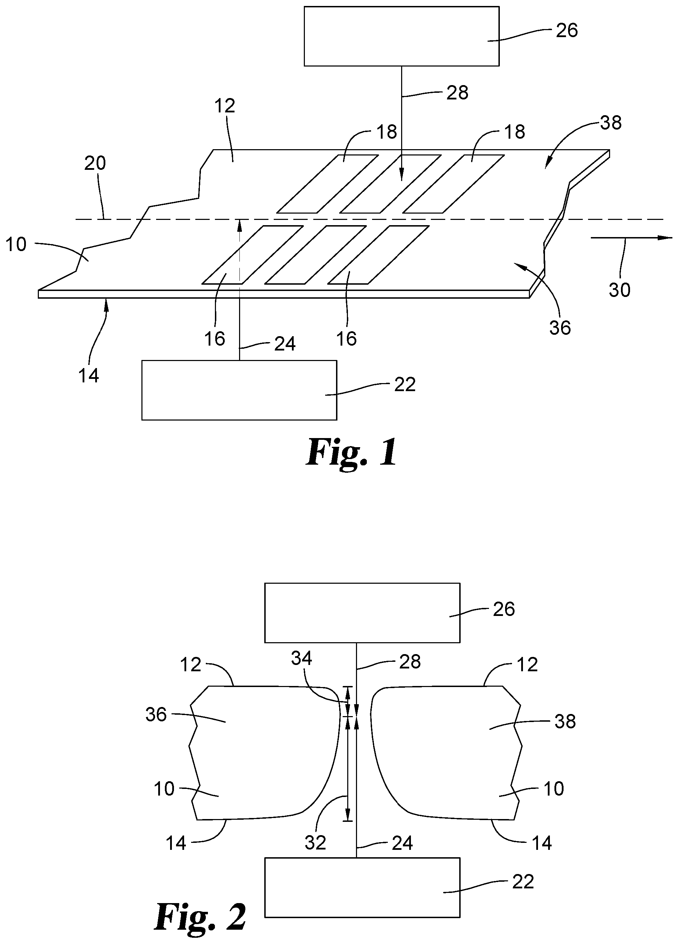

Before describing various features of the methods, use, film material, test strips and apparatus provided herein in detail, a brief discussion of the general concepts of the invention is provided by reference to Figures 1 and 2.

Referring to FIG. 1, film material 10 includes a top, working surface 12 and a bottom surface 14. Working surface 12 preferably contains a first series of biosensor test elements 16 and a second series of biosensor test elements 18 on opposite sides of centerline 20. These test elements preferably include on the working surface various working components (not shown) such as dosing ports, capillary passageways, electrodes, reagents and the like.

Bottom laser system 22 directs bottom laser beam 24 in the direction of centerline 20 of bottom surface 14. Working surface laser system 26 directs working surface laser beam 28 in the direction of centerline 20 of working surface 12. Preferably, both of the bottom and working surface laser beams are stationary relative to an external supporting surface and film material 10 is moved at a constant rate in direction 30 relative to the laser beams.

The film material in the method depicted in FIG. 1 was polyethylene terephthalate ("PET"), a substrate material commonly used to fabricate biosensor test strips. Other suitable film materials are known in the art, and include other polymers, coated polymers, metallized polymers, co-extruded polymers, and multi-layer paper-polymer and multi-layer cardboard-polymer substrates. New materials also may be known and/or developed in the future. The processes described herein are suitable for use with such various film materials. Preferably, the film material is a polymer; more preferably the film material is PET. Suitable laser types and operating parameters for the methods may be selected by a person of ordinary skill in the art without undue experimentation based on factors as described herein.

As represented in FIG. 2, bottom laser beam 24 cuts into film material 10 to a first cut depth 32, and working surface laser beam 28 cuts into film material 10 to a second cut depth 34. As explained hereafter, the process is depicted in FIG. 2 with the first cut depth 32 being substantially greater than the second cut depth 34. Therefore, the first cut depth 32 (i.e. the bottom laser cut depth) is substantially greater than the second cut depth (34) (i.e. the working surface laser cut depth).

When the method is performed as shown in FIG. 1, movement of film material 10 relative to the laser beams results in film material 10 first encountering bottom laser beam 24 and then working surface laser beam 28. As described hereafter, however, the laser beams may be arranged in other positions in certain embodiments. Also, the process is demonstrated in Figure 1 with the bottom and working surface laser beams being aligned along the direction of travel 30 so that the respective cuts are aligned vertically, along centerline 20, as will be described. Accordingly, the bottom laser beam and the working surface laser beam are aligned and the bottom laser beam is positioned to cut the film material prior to the working surface laser beam.

The process is shown in FIG. 2 with the bottom and working surface laser cuts overlapping or intersecting so as to completely cut through and separate the film material into first portion 36 and second portion 38.

Having now set forth the general concept of the invention, various features will be described in more detail.

### Relative Movement

The processes involve providing relative movement between the film material and the bottom and working surface laser beams. Those skilled in the art will recognize that as used herein, the movement of the film material relative to a laser can refer to moving the film material and keeping the laser stationary; moving both the film material and the laser; or moving the laser and keeping the film material stationary. Preferably, the processes involve moving the film material relative to at least one stationary laser.

In more detail, there are generally three different configurations of laser cutting machines for providing such relative movement: moving material, hybrid, and flying optics systems. These terms refer to the way that the laser beam and material to be cut are moved relative to one another. Moving material laser systems have stationary cutting heads and move the material under them (X and Y axis directions). Hybrid laser systems provide a method which moves the material being processed in one direction (usually the X-axis direction), and the laser beam is moved along the shorter (Y) axis. Flying optics lasers feature a stationary table and a cutting head with laser beam that moves over the workpiece in both of the horizontal dimensions (X and Y axis directions). The methods are operable with respect to each of these types of systems and any combination thereof. In a preferred method, the bottom and working surface laser beams are stationary except when adjusting for centerline 20 position, and the film material is moved relative thereto.

The result of laser cutting is a cut edge with a surface profile and finish which depend on the type and operating conditions of the laser system(s). The present processes involve an approach in which at least two laser beams are used. Generally, the relatively "coarse" bottom laser beam is more disruptive or provides less desirable results in terms of any one or more of several factors. Thus, the processes described herein present distinct advantages over a single cut-through laser directed at either the working surface or bottom surface. Further, the laser cutting is a contactless operation and does not have many of the disadvantages associated with mechanical slitting of the film material.

### Kerf

A laser burns away and/or vaporizes a portion of material when it cuts into the material. This material is known as the laser "kerf". There are a number of factors involved with respect to the kerf. These include, *inter alia,* the total amount of material removed, the width of the cut at the level of the material surface, and the shape and depth of the cut. These characteristics in turn depend on a number of factors, including the properties of the material being cut, its thickness, laser power, laser wavelength, laser pulse frequency, laser pulse width, laser beam geometry (size and shape), focal length of the laser lens, type of laser assist gas and relative speed of the laser beam to the material being processed.

Advantages are obtained with a small kerf in that it reduces the amount of material lost during the cutting process, it allows close nesting of parts, and it may reduce the time required for the cut. However, the width of the cut will depend in part on the depth of the cut, as the sides of the cut have an angle such that the width at the material surface is greater than the width at the bottom of the cut. This means that the width at the material surface increases with the depth of cut required. Cutting a film material entirely through from one side thus presents a relatively wide cut as compared to cutting the film material in a two-step process as described herein, once from one side and once from the other side. This also means that the total amount of removed material may be greater with only a single cut from one side, which in turn may generate additional debris and require more energy and time to accomplish.

Preferably, therefore, the bottom laser beam is more coarse relative to the working surface laser beam. The bottom laser beam preferably has a wider kerf than the working surface laser beam. Preferably, the bottom laser beam is more coarse and has a wider kerf than the working surface laser beam.

### Debris

Certain laser cutting essentially vaporizes much of the kerf. However, in almost all settings, the laser cutting will release particles or otherwise generate debris. It is therefore the case that this produced debris may become deposited on an adjacent surface of the film material. It is desirable to minimize this debris as it can adversely affect many aspects of a biosensor test strip, including sample transport and functioning of the electrodes and reagent. Preferably, therefore, the working surface laser beam and/or the bottom laser beam is configured or chosen to minimize the debris deposited on an adjacent surface of the film material.

### Cut Character

The "cut character" refers to the precision and smoothness of the line along which the cutting occurs along the surface of the film material. It also refers to the angle of the edge surface formed by the laser cut relative to the bottom or working surface of the film material. Laser cutting according to the present processes allows for optimization of the cut character, particularly along the working surface edge adjacent to the working components of the biosensor test strip. Preferably, for a film material having multiple biosensor test strips, such as in a 2-up process, it is desirable to have the cut on the working surface of the film material precisely positioned, and to have a well-defined surface edge and profile.

### Heat Affected Zone (HAZ)

Laser cutting presents varying degrees of heat in the area being cut. The resulting HAZ will vary depending on the type of laser, its operating parameters, the nature of the film material, and other factors. This HAZ may affect portions of the test strip in or near the zone. It may have particular affect on the structure of the opening to the capillary chamber, the electrodes and/or the reagent.

### Recast

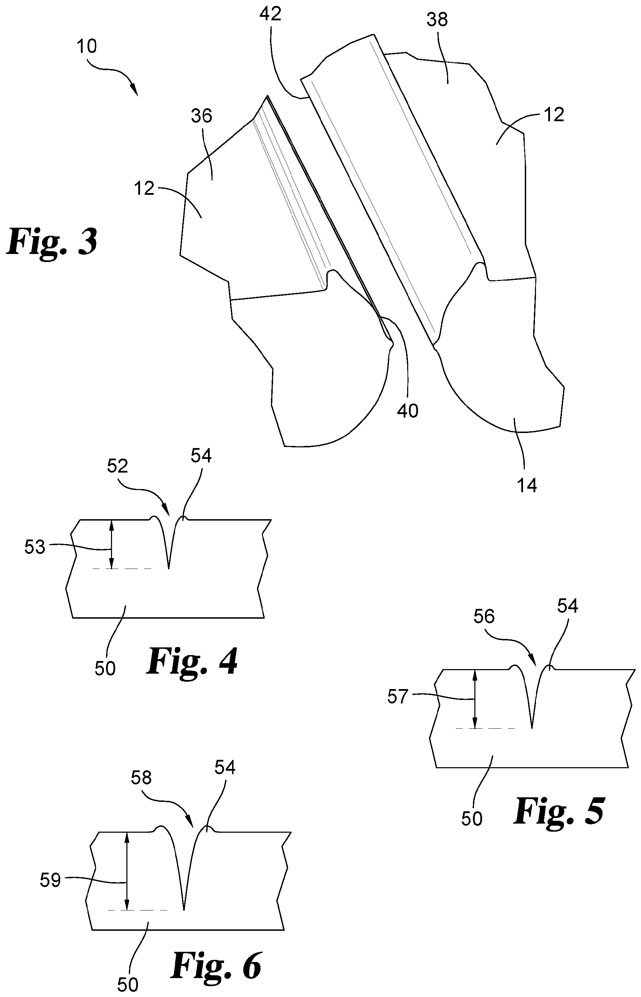

Laser cutting can leave a recast layer 54 (FIGS. 4-6) on or adjacent the surface. Because lasers melt and burn some of the film material, re-solidified materials may be formed or deposited along or near the cut line. This material may be highly stressed and may crack. It may also distort the precision and/or smoothness of the cut line, and provide an uneven surface at the opening to the capillary chamber. Preferably, therefore, the working surface laser beam and/or the bottom laser beam is configured or chosen to minimize recast.

### UV Lasers

Analyte reagents may include components which are sensitive to exposure to UV rays. There is therefore a risk in using a UV laser directed at the working surface of a biosensor test strip. If a UV laser is to be used, care must be taken to avoid contacting the reagent material.

### Alignment and Position

The dual laser cuts on the bottom surface and working surface allow for separation of the film material. The cuts are overlapping such that they intersect, and, in one approach, the film material is fully separated by virtue of the cuts alone.

For intersecting cuts, the vertical alignment simply involves having the two cuts overlap. With the bottom laser cut being made before the working surface laser cut, the bottom laser cut occurs while the working surface is not exposed. The film material is therefore moved relative to the bottom laser beam and the working surface laser beam in a process direction such that the bottom laser beam contacts the film material first. The working surface laser is then positioned relative to the film material such that the working surface laser beam contacts the film material second, after the bottom laser beam has made its cut.

In the alternative, the bottom and working surface laser cuts do not intersect. For such non-overlapping laser cuts, the order of cutting is less relevant. That is, regardless of the order, the bottom laser cut is made without exposure to the working surface as the connecting material seals away the working surface from the bottom laser beam. Thus, in one embodiment the bottom laser and the working surface laser may be positioned with the bottom laser beam making its cut first, as for intersecting cuts. However, for non-overlapping cuts the film material alternatively may as well be contacted by the working surface laser beam first, followed by contact by the bottom laser beam.

Preferably, therefore, in one aspect the working surface laser beam and the bottom laser beam are aligned and the working surface laser cut and the bottom surface laser cut intersect; wherein more preferably the bottom laser beam is positioned to make the bottom laser cut is made before the working surface laser beam makes the working surface laser cut.

### General Comparison of Bottom and Working Surface Lasers

The working surface laser is selected to provide improved cutting over the bottom laser in terms of reducing any or all of the following: kerf, the HAZ, the recast, the amount of debris deposited on the working surface, and the amount of damage to the electrodes, reagents or other working components of the biosensor test strip. In this manner, the type and operating conditions of the working surface laser and the bottom laser are selected such that production throughput is high while the resulting laser cut at the working surface is in excellent condition. The produced biosensor test strips also have enhanced product performance.

In its broadest application, the present concept allows for improved laser cutting of the working surface of a biosensor test strip regardless of the relative characteristics of the working surface laser beam compared to the bottom laser beam. As presently disclosed, the use of separate bottom and working surface laser beams allows for rapid processing with advantageous cut properties along the working surface. The bottom laser is used to cut part way into the film material, thereby reducing the depth of cut required by the working surface laser.

Even if the working surface laser beam is inferior as to some characteristics, the use of the bottom laser beam results in the working surface laser beam doing less cutting into the working surface, which correspondingly reduces the affect of kerf, HAZ, recast, debris, etc. as compared to a full cut-through of the film material in one direction.

For the same reasons, the present processes also provide advantages with respect to an arrangement useful for understanding the invention, in which the same or equivalent bottom and working surface laser beams are used. These approaches may be desirable, for example, as the process may be performed with two identical laser systems, thus providing advantages in terms of maintenance and other considerations for the laser systems. This could also be done by use of a split laser beam in which separate portions of the laser beam are directed against the bottom surface and the working surface of the film material, providing increased film cutting efficiency, reduced deposited debris and improved cut symmetry.

### Working Surface Laser Beam

The working surface laser beam is selected to provide the cut characteristics desired for the edge of the working surface of the biosensor test strips. The type and/or operating parameters of the working surface laser beam are established to achieve one or more desired cut
properties. This in turn may establish other characteristics of the cut and the production process, such as depth of cut or line speed.

Specification of the working surface laser beam may be based on any of several different factors. A particular consideration for the working surface laser beam is the optimization of certain quality factors. The factors may include optimizing any of the previously described cut characteristics such as kerf width, debris, etc. According to the invention, the working surface laser beam be based more on photoablation of kerf material, rather than thermal interaction, as it produces less debris, and therefore less need to remove debris during the process. The working surface laser may produce as compared to the bottom laser beam a more precise and uniform cut line and angle. As another example, lower HAZ and/or recast are desirable as they reduce the likelihood of damage to nearby working components such as the reagent and electrodes. Other factors may include practical considerations based on the type of laser systems available, including cost, power requirements and the like.

The working surface laser may be of a type and/or operate under conditions to provide a finer, more precise cut edge. Since less depth of cut and removal of kerf is involved than for cutting fully through the film material, the working surface laser is able to provide the desired cut in less time. Because the bottom laser cuts to a greater degree than the working surface laser, the working surface laser is even better able to complete the relatively "fine" cut under less harsh conditions, and still accomplish the cut in the same time required for the bottom laser to make its cut.

A factor in the production of commercial quantities of biosensor test strips is the line speed of the film material on which the biosensors are formed. The present invention illustratively allows for higher quality working surface cuts at faster film speeds than with a single, cut-through laser. For example, working surface cuts with a fine working surface laser can accomplish film speeds of at least 20 m/min.

When a UV laser is used to cut into the working surface, it is advantageous that the working surface laser beam may be more focused in accordance with the present invention. This lessens the risk of a UV laser damaging the reagent. If a UV laser is used, it is desirable that the laser beam be relatively small to minimize or eliminate the potential for reducing the efficacy of the enzymes, mediators or other components of the reagent.

Accordingly, therefore, the working surface laser beam operates based more on photoablation of kerf material, rather than thermal interaction. As described herein, the working surface laser beam is a UV laser. Still more preferably, the working surface laser beam is a pulsed UV laser. Preferably, the working surface laser beam is a pulsed UV laser having a picosecond pulse duration (i.e. preferably the working surface laser beam is a PS UV laser). More preferably, the working surface laser beam has a beam width of from about 7 to about 15 µm diameter. Preferably, the working surface laser beam cuts the film material to a depth of approximately 4% - 28%. Preferably, the film material is PET.

### Bottom Laser Beam

The bottom laser beam is selected to coordinate with the working surface laser beam to be used. For example, the bottom laser beam preferably cuts at the same line speed as the working surface laser beam, and also cuts to a depth of cut sufficient to closely approach or connect with the cut by the working surface laser beam. The bottom laser typically has a faster processing speed, a more thermal and larger kerf width, a larger HAZ, and/or a higher recast than the working surface laser.

The bottom laser cuts into the film material to a greater depth than the working surface laser. In this respect, the bottom laser is of a type and/or operates under parameters such that a deeper cut can be made in the same amount of time as the shallower cut into the working surface. The bottom cut may also be wider as the additional loss of "kerf", and resulting debris, is of less consequence at the bottom surface of the test strip. By using a working surface laser that results in reduced kerf, the amount of material which may become deposited on the components of the working surface is correspondingly reduced. Since a significant portion of the kerf is produced on the underside of the film material, it is remote from the working surface and will not contribute appreciably to any deposit of material on the working surface. Further, the edge properties at the bottom surface are also of less consequence as it is not directly involved in the dosing of liquid to the test strip.

Accordingly, therefore, the bottom laser beam operates based more on thermal interaction, rather than photoablation of kerf material. As described herein, the bottom laser beam is a CO₂ laser. Still more preferably, the bottom laser beam is a pulsed CO₂ laser. Preferably, the bottom laser beam has a beam width of from about 50 to about 60 µm diameter. Preferably, the bottom laser beam cuts the film material to a depth of approximately 72% - 96%. Preferably, the film material is PET.

### Example

Illustratively, two lasers were used with a pulsed CO₂ laser operating as the bottom laser, and a picosecond UV (PS UV) laser functioning as the working surface laser. In this example, the CO₂ and UV laser systems and beams were positioned at a stationary point and the film material was constantly moved relative to the laser beams. The laser cuts overlapped in the vertical direction, thereby completely separating the PET into first and second portions.

This combination of lasers exemplified the advantageous results achieved by the dual laser approach disclosed herein.

### Pulsed CO₂

The process was performed on PET film of a type used in the production of biosensor test strips. A pulsed CO₂ laser was used as it was known to cut PET film efficiently, enabling suitably fast film processing speeds. While the PET film was in motion, the bottom laser cut (upstream) was made by the pulsed CO₂ laser into the bottom of the film. The laser made a controlled-depth cut into the majority of the film thickness (approximately 72% - 96%). The laser cut into the bottom surface without breaking through to the working surface of the biosensor to better protect the working surface from damage, minimize debris deposited on the reagent surface, and minimize heat transfer to the reagent surface. The high removal rate of the pulsed CO₂ laser facilitated faster production processing speeds

Pulsed CO₂ lasers typically have beam diameters focused to 50 - 60 µm, depending on set-up. When used for providing the bottom laser beam, this resulted in a tapered cut profile with a wider cut at the bottom surface of the film material where it is not significant and a narrow cut toward the top of the film where the cut will be adjacent, or connect with, the cut of the working surface laser beam.

However, the CO₂ laser produced a larger kerf width, had higher levels of recast, and was more thermal, resulting in a larger HAZ, than the PS UV laser. The relatively larger focused beam diameter of the CO₂ laser affected a larger section of film material. The resulting higher recast at the edge of the working surface might have negatively affected biosensor dosing behavior if on the working surface side, but it was readily acceptable on the bottom surface. Thus, use of a single pulsed CO₂ laser would have been less suitable, or completely unsuitable, as a cut-through laser, but it was useful in accordance with the present invention.

IR energy from the pulsed CO₂ laser was readily absorbed by the PET. The highly thermal cutting process easily cut the PET film. The controlled-depth cut positioned well below the reagent layer minimized heat transfer and any associated thermal damage to the reagent. It also enabled faster film slitting speeds. After accounting for laser characteristics and system set-up, controlled-depth cutting into the bottom of the PET film without breaking through to the top surface led to less debris in the functional area of the biosensor

### Picosecond PS UV

A PS UV laser was used to provide the working surface laser beam. The PS UV laser was significantly less thermal (more photonic bond breaking). It also slit the biosensors with a smaller kerf width, smaller HAZ, and lower recast. The PS UV laser had a relatively smaller focused beam diameter and picosecond pulse duration, and therefore cut the PET with minimal film and reagent damage. The resulting minimal recast at the edge of the working surface had a less deleterious effect on the biosensor dosing behavior.

In contrast, using a single PS UV laser to cut through the PET would not have allowed the fast film slitting speeds, as the PS UV laser cuts PET film less efficiently, requiring slower film processing speeds. On the other hand, using multiple PS UV laser systems to increase the biosensor slitting speed (production throughput) would be cost prohibitive.

The picosecond UV laser (PS UV) was characterized by a beam diameter focused to a 7-15 µm diameter, providing a very narrow cut width in the PET film. This minimized wasted reagent and PET film in the functional area of the biosensor. The UV wavelength and pulse duration (<15 ps) minimized heat transfer and thermal damage to the reagent layer. After accounting for laser characteristics and system set-up, controlled-depth cutting into the top of the PET film with the PS UV laser led to less debris in the functional area of the biosensor. The small, controlled-depth cut through the reagent layer into the PET enabled faster film processing speeds.

While the PET film was in motion, the working surface laser cut (downstream) was made by the PS UV laser into the working surface of the film. The laser made a controlled-depth cut into the remaining film thickness (approximately 4% - 28%), separating the film material into two separate, opposing portions. The laser cut through to the preceding bottom-side laser cut without damaging the working surface of the biosensor by minimizing heat transfer, recast and debris on the reagent surface. Using the PS UV laser for a small portion of the overall required cut depth facilitated faster production processing speeds

### Laser Selection

The use of CO₂ and UV lasers was by way of example only. As has been described, the selection of the bottom and working surface laser beams may readily be made by a person of ordinary skill in the art based on the present teachings. The selection may depend on the materials being divided, desired cut characteristics, and other considerations. An advantage is obtained by using suitable lasers in the manner that the bottom surface may be cut in a more expedient manner without affecting the working surface components. The working surface laser then is selected to provide conditions with less disruption, e.g., less kerf, HAZ, recast, and debris.

### Partial Overlap

A third option is to provide only intermittent regions where the cuts by the working surface and bottom laser beams intersect. For example, the energy of the bottom or working surface laser beam may be increased at successive, spaced times to cause a cut by the beam which alternates between a relatively shallow cut and a relatively deeper cut. This cut is provided to a depth such that the cut connects with the opposed laser cut only where the relatively deeper cuts are made. The result is a series of through-holes forming a perforated line between the first and second portions of film material. This maintains the connection between the two portions, subject to later separation. This also provides a serrated edge upon separation. In some situations, the serrated edge is located adjacent to the location where a blood or other sample will be applied to the biosensor test strip. This can be advantageous because the serrated edge may assist in breaking the surface tension of the sample, which then promotes transfer of the sample to the test chamber.

Accordingly, the working surface laser cut and the bottom laser cut intersect. In another preferred aspect the working surface laser cut and the bottom laser cut intersect only in intermittent regions; in this aspect a series of through-holes forming a perforated line between first and second portions of the film material is formed.

### Multiple Laser Beams

In another aspect, the working surface and bottom surface may be cut at multiple times in a single pass of the film material. Referring in particular to FIGS. 4-6, there is shown a film material that has received three successive, increasingly deeper cuts from three laser beams. In FIG. 4, film material 50 has received an initial cut 52 extending a short distance 53, and a small amount of recast 54 is visible on either side of cut 52. Film material 50 has a deeper cut 56 that extends to a depth 57 in FIG. 5. Although cut 56 is deeper than cut 52, it does not appear to have had a significant, if any, amount of additional recast. An even deeper cut 58 to a depth 59 has been formed with continued movement of the film material, as shown in FIG. 6. Again, the deeper cut does not appear to have contributed a significant amount of additional recast.

Thus, advantages may be achieved by making multiple cuts which will modify the results that would otherwise occur if only a single cut was made to the same depth. For example, this more efficient PS UV laser cutting method delivers deeper PS UV controlled-depth cuts at a particular film speed and focused spot size, with minimal debris deposited on the reagent surface. This in turn allows the pulsed CO₂ cut and its associated heat to be positioned further away from the functional surface of the biosensor, keeping heat away from the reagent layer and minimizing any potential product performance concerns.

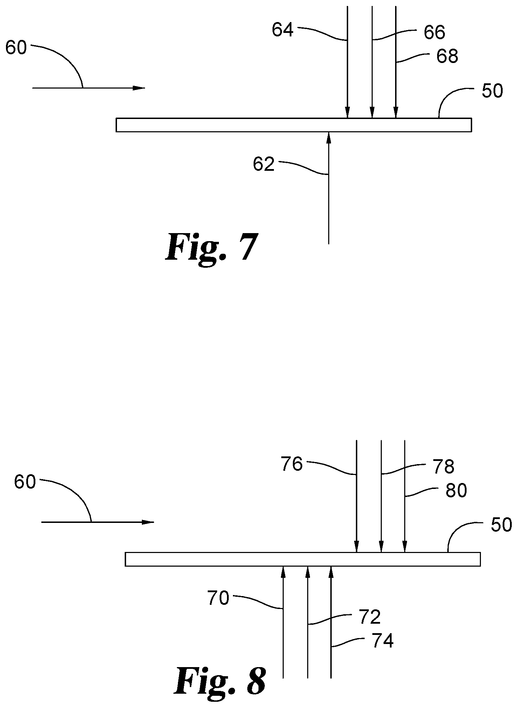

The set-up for a multiple laser beam pass is shown diagrammatically in FIG. 7. Film material 50 is moved in direction 60 and first encounters bottom laser beam 62. As film material 50 progresses to the right in FIG. 7, it encounters three successive working surface laser beams 64, 66 and 68. This successive cutting may be accomplished using multiple laser systems, a split beam from a single laser system, or a scanning laser beam.

The use of multiple laser systems and/or multiple laser beams provides flexibility and greater opportunity for optimization of cutting conditions to define the characteristics of each successive cut. For example, the focal plane of subsequent beams may be located at increasingly deeper film depths.

In an embodiment, a laser beam is split into multiple beams to facilitate efficient film slitting with reduced debris and recast. This may increase utilization of the energy from a single laser, e.g., a PS UV laser. This also may allow for avoiding the cost of multiple laser systems to provide the multiple laser beams. For example, a single beam from a PS UV laser may be split into 2, 3 or more beams directed to make successive, aligned cuts in separating the biosensor test strips.

By way of example, the method may distribute the pulse energy from a single picosecond ("PS") UV laser by splitting the original, high energy beam into multiple beams. Each beam delivers lower fluence (J/cm2) to the substrate in the ablation zone than the original, single beam. Multiple PS UV beams avoid the cost of additional lasers by generating multiple beams from a single laser system. The beams may be mechanically arranged in tandem and in-line with the film direction, and each focused spot is positioned for efficient ablation/cutting and minimal debris generation. The beams may be focused without overlapping each other, maintaining a small gap between subsequent beams.

In yet another embodiment, the working surface and/or bottom laser beam is not held stationary, but instead scans a distance along the line of movement of the film material relative to the scanning beam. This results in successively deeper cuts with each scan over a given location. In one example, the working surface laser beam scanned a short line within the process window (defined by field-of-view, film speed, laser scan rate) along the film material coincident to the direction of travel of the film material. The scanning of the laser beam effectively extended the time of exposure of the film material to the laser cutting, thereby providing a deeper cut than in the case of a fixed beam acting upon a film material moving at the same speed.

By way of further example, FIG. 8 shows in diagrammatic form a method as presently disclosed which uses multiple laser beams for cutting both the bottom surface and the working surface. Film material 50 is moved in the direction 60 relative to both sets of laser beams. Film material 50 first encounters bottom laser beams 70, 72 and 74. With continued movement in direction 60, film material 50 encounters working surface laser beams 76, 78 and 80. As already discussed, either or both of these sets of multiple laser beams may be provided by the use of multiple laser systems and/or a split-beam laser system.

Preferably, therefore, the working surface laser beam and/or the bottom surface laser beam comprises a plurality of laser beams. The plurality of laser beams produces a plurality of laser cuts of successively larger kerf depth. Preferably, in one embodiment, the plurality of laser beams provided by a single laser having split beams. Preferably, in another embodiment, the plurality of laser beams provided by multiple lasers. Preferably, the working surface laser beam and/or the bottom laser beam scans a distance along the line of movement of the film material relative to the scanning beam.

In embodiments, therefore, provided herein is a method of slitting a film material of a biosensor test strip using a working surface laser beam and a bottom laser beam as described herein; and wherein:
- the working surface laser beam and the bottom laser beam are provided by separate lasers;
- the working surface laser beam is a UV laser; preferably a pulsed UV laser;
- the bottom laser beam is a CO2 laser; preferably a pulsed CO2 laser;
- the bottom laser beam is positioned to cut the film material prior to the working surface laser beam;
- the bottom laser cut depth is substantially greater than the working surface laser cut depth;
- the film material is, optionally, PET; and
- the working surface laser cut and the bottom surface laser cut intersect; and the bottom laser beam is positioned to make the bottom laser cut before the working surface laser beam makes the working surface laser cut;
   and optionally
- the working surface laser beam and/or the bottom surface laser beam comprises a plurality of laser beams.

Preferably, in this embodiment, the working surface laser beam and/or the bottom laser beam is kept stationary except when adjusting for centerline position, and the film material is moved relative thereto; and/or the working surface laser beam and/or the bottom laser beam scans a distance along the line of movement of the film material relative to the scanning beam.

In yet more preferred embodiments, therefore, provided herein is a method of slitting a film material of a biosensor test strip using a working surface laser beam and a bottom laser beam as described herein; and wherein:
- the working surface laser beam and the bottom laser beam are provided by separate lasers;
- the working surface laser beam is a pulsed UV laser having picosecond pulse duration (a PS UV laser) preferably having a beam width of from about 7 to about 15 µm diameter
- the bottom laser beam is a pulsed CO₂ laser preferably having a beam width of from about 50 to about 60 µm diameter;
- the working surface laser beam cuts the film material to a depth of approximately 4% - 28% and the bottom laser beam cuts the film material to a depth of approximately 72% - 96%
- the film material is PET; and
- the working surface laser cut and the bottom surface laser cut intersect; and the bottom laser beam is positioned to make the bottom laser cut before the working surface laser beam makes the working surface laser cut;
   and optionally
- the working surface laser beam and/or the bottom surface laser beam comprises a plurality of laser beams.
Preferably, in this embodiment, the working surface laser beam and/or the bottom laser beam is kept stationary except when adjusting for centerline position, and the film material is moved relative thereto; and/or the working surface laser beam and/or the bottom laser beam scans a distance along the line of movement of the film material relative to the scanning beam.

Also provided herein is the use of multiple laser beams to slit a film material of a biosensor test strip, said film material having a working surface and a bottom surface, and said multiple laser beams comprising a working surface laser beam directed against the working surface of the film material and a bottom laser beam directed against the bottom surface of the film material. The laser beams, the film material and the configurations of each are preferably as described herein.

Also provided herein is a slit film material obtainable by slitting a film material using the methods provided herein. The methods used in this aspect are preferably any of the preferred methods disclosed herein. The slit film material has properties which are determined by the slitting process used in its production, as described herein.
Also provided herein is a biosensor test strip comprising a slit film material obtainable using the methods provided herein. The methods used in this aspect are preferably any of the preferred methods disclosed herein. The biosensor test strip has properties which are determined by the properties of the slit film material comprised therein, which in turn has properties which are determined by the slitting process used in its production, as described herein.

Also provided herein is an apparatus for carrying out the methods provided herein. The apparatus preferably comprises a bottom laser for generating a bottom laser beam configured to cut into the bottom surface of a film material of a biosensor test strip, and a working surface laser laser for generating a working surface laser beam configured to cut into the working surface of a film material of a biosensor test strip. Preferably the apparatus is configured to move the film material relative to the bottom laser beam and the working surface laser beam. Preferably the film material, bottom laser beam and working surface laser beam are as described herein.

While the invention has been illustrated and described in detail in the drawings and foregoing description, the same is to be considered as illustrative and not restrictive in character, it being understood that only the preferred embodiment has been shown and described and that all changes, equivalents, and modifications that come within the present invention to the extent defined by following claims.

### Reference Numbers

- 10: film material
- 12: upper, working surface
- 14: bottom surface
- 16: first test elements
- 18: second test elements
- 20: centerline
- 22: bottom laser system
- 24: bottom laser beam
- 26: working surface laser system
- 28: working surface laser beam
- 30: direction arrow
- 32: first depth (bottom surface)
- 34: second depth (working surface)
- 36: first portion of film material
- 38: second portion of film material
- 40: remainder of connecting portion
- 42: remainder of connecting portion
- 50: film material
- 52: first cut
- 53: depth of first cut
- 54: recast
- 56: second cut (deeper)
- 57: depth of second cut
- 58: third cut (still deeper)
- 59: depth of third cut
- 60: direction arrow
- 62: bottom laser beam
- 64: first working surface laser beam
- 66: second working surface laser beam
- 68: third working surface laser beam
- 70: first bottom laser beam
- 72: second bottom laser beam
- 74: third bottom laser beam
- 76: first working surface laser beam
- 78: second working surface laser beam
- 80: third working surface laser beam

## Claims

1. A method of slitting a polymeric film material (10) of a biosensor test strip, the film material including a working surface (12) with working components (16, 18) and an opposed bottom surface (14), comprising:
moving the film material relative to a working surface laser beam (28) directed against the working surface of the film material;
making a working surface laser cut of the film material using the working surface laser beam; and separating the first portion of the film material from the second portion of the film material;
**characterized in that**:
the moving the film material is relative to a bottom laser beam (24) directed against the bottom surface of the film material;
the working surface laser beam and the bottom laser beam are provided by separate lasers (22, 26), wherein the bottom laser beam is a CO₂ laser beam and the working surface laser beam is a UV laser beam;
the method further comprises making a bottom laser cut partially into the bottom surface of the film material to a first depth using the bottom laser beam, the bottom laser cut defining first and second portions of the film material on opposite sides of the bottom laser cut;
the working surface laser cut of the film material is made to be aligned with the bottom laser cut; wherein the working surface laser cut and the bottom surface laser cut intersect;
the bottom laser cut is deeper than the working surface laser cut; and
the working surface laser beam operates based more on photoablation of kerf material than on thermal interaction; and the bottom surface laser beam operates based more on thermal interaction than on photoablation of kerf material.

2. The method of claim 1 in which the working surface laser cut has intermittent openings which connect with the bottom laser cut.

3. The method of claim 2, wherein at least one of the working surface laser cut and bottom laser cut are made by intermittent laser pulsing.

4. The method of any one of claims 1 to 3 in which the bottom laser beam is positioned to cut the film material prior to the working surface laser beam, such that the bottom laser cut occurs in advance of the working surface laser cut.

5. The method of any one of claims 1 to 4 in which the bottom laser beam and the working surface laser beams are stationary and the film material is moved relative to the stationary laser beams.

6. The method of claim 5, comprising orienting at least one of the working surface laser beam and the bottom laser beam relative to the working components of the film material.

7. The method of any one of claims 1 to 6 in which at least one of the bottom laser beam and working surface laser beam is a scanning beam.

8. The method of any one of claims 1 to 7 in which at least one of the bottom laser beam and working surface laser beam is a portion of a hybrid or flying optics system.

9. The method of any one of claims 1 to 8 in which at least one of the bottom laser beam and the working surface laser beam comprises a plurality of laser beams making a plurality of laser cuts of successively larger kerf depth

10. The method of claim 9, wherein making the successively larger laser cuts comprises using multiple laser systems.

11. The method of claim 9, wherein making the successively larger laser cuts comprises using a single laser having split beams.

12. The method of any one of claims 1 to 11, wherein the working surface laser beam is a PS UV laser beam.

13. The method of any one of claims 1 to 12 in which (i) the first portion of film material comprises a first plurality of biosensor working surfaces and the second portion of film material comprises a second plurality of biosensor working surfaces; and/or (ii) the opposed bottom surface includes working components.

14. The method of any one of the preceding claims, wherein (i) the bottom laser cut has a wider kerf than the working surface laser cut and/or (ii) the bottom laser beam is more coarse relative to the working surface laser beam.

15. A biosensor test strip comprising a slit film material obtained by slitting a film material using the method of any one of claims 1 to 14.

## Patentansprüche

1. Verfahren zum Schlitzen eines polymeren Folienmaterials (10) eines Biosensor-Teststreifens, wobei das Folienmaterial eine Arbeitsfläche (12) mit Arbeitskomponenten (16, 18) und eine gegenüberliegende Bodenfläche (14) beinhaltet, umfassend:
Bewegen des Folienmaterials relativ zu einem Arbeitsflächen-Laserstrahl (28), der gegen die Arbeitsfläche des Folienmaterials gerichtet ist;
Herstellen eines Arbeitsflächen-Laserschnitts des Folienmaterials unter Verwendung des Arbeitsflächen-Laserstrahls; und Trennen des ersten Abschnitts des Folienmaterials von dem zweiten Abschnitt des Folienmaterials;
**dadurch gekennzeichnet, dass**:
das Bewegen des Folienmaterials relativ zu einem Bodenlaserstrahl (24) erfolgt, der gegen die Bodenfläche des Folienmaterials gerichtet ist;
der Arbeitsflächen-Laserstrahl und der Bodenlaserstrahl durch getrennte Laser (22, 26) bereitgestellt werden, wobei der Bodenlaserstrahl ein CO₂-Laserstrahl ist und der Arbeitsflächen-Laserstrahl ein UV-Laserstrahl ist;
das Verfahren ferner das Ausführen eines Bodenlaserschnitts teilweise in die Bodenfläche des Folienmaterials bis zu einer ersten Tiefe unter Verwendung des Bodenlaserstrahls umfasst, wobei der Bodenlaserschnitt erste und zweite Abschnitte des Folienmaterials auf gegenüberliegenden Seiten des Bodenlaserschnitts definiert;
der Arbeitsflächen-Laserschnitt des Folienmaterials so ausgeführt wird, dass er mit dem Bodenlaserschnitt ausgerichtet ist; wobei sich der Arbeitsflächen-Laserschnitt und der Bodenflächen-Laserschnitt schneiden;
der Bodenlaserschnitt tiefer ist als der Arbeitsflächen-Laserschnitt; und
der Arbeitsflächen-Laserstrahl mehr auf der Grundlage von Photoablation von Fugenmaterial als von thermischer Wechselwirkung arbeitet; und der Bodenflächen-Laserstrahl mehr auf der Grundlage von thermischer Wechselwirkung als von Photoablation von Fugenmaterial arbeitet.

2. Verfahren nach Anspruch 1, wobei der Arbeitsflächen-Laserschnitt intermittierende Öffnungen aufweist, die mit dem Bodenlaserschnitt verbunden sind.

3. Verfahren nach Anspruch 2, wobei mindestens einer des Arbeitsflächen-Laserschnitts und des Bodenlaserschnitts durch intermittierendes Laserpulsen hergestellt werden.

4. Verfahren nach einem der Ansprüche 1 bis 3, wobei der Bodenlaserstrahl so positioniert ist, dass er das Folienmaterial vor dem Arbeitsflächen-Laserstrahl schneidet, so dass der Bodenlaserschnitt vor dem Arbeitsflächen-Laserschnitt auftritt.

5. Verfahren nach einem der Ansprüche 1 bis 4, wobei der Bodenlaserstrahl und die Arbeitsflächen-Laserstrahlen stationär sind und das Folienmaterial relativ zu den stationären Laserstrahlen bewegt wird.

6. Verfahren nach Anspruch 5, umfassend das Ausrichten mindestens einesdes Arbeitsflächen-Laserstrahls und des Bodenlaserstrahls relativ zu den Arbeitskomponenten des Folienmaterials.

7. Verfahren nach einem der Ansprüche 1 bis 6, wobei mindestens einer des Bodenlaserstrahls und des Arbeitsflächen-Laserstrahls ein Abtaststrahl ist/sind.

8. Verfahren nach einem der Ansprüche 1 bis 7, wobei mindestens einer des Bodenlaserstrahls und des Arbeitsflächen-Laserstrahls ein Abschnitt eines Hybrid- oder fliegenden Optiksystems ist/sind.

9. Verfahren nach einem der Ansprüche 1 bis 8, wobei mindestens einer des Bodenlaserstrahls und des Arbeitsflächen-Laserstrahls eine Vielzahl von Laserstrahlen umfasst/umfassen, die eine Vielzahl von Laserschnitten mit sukzessiv größerer Fugentiefe ausführen.

10. Verfahren nach Anspruch 9, wobei das Ausführen der sukzessiv größeren Laserschnitte das Verwenden mehrerer Lasersysteme umfasst.

11. Verfahren nach Anspruch 9, wobei das Ausführen der sukzessiv größeren Laserschnitte das Verwenden eines einzelnen Lasers mit geteilten Strahlen umfasst.

12. Verfahren nach einem der Ansprüche 1 bis 11, wobei der Arbeitsflächen-Laserstrahl ein PS-UV-Laserstrahl ist.

13. Verfahren nach einem der Ansprüche 1 bis 12, wobei (i) der erste Abschnitt des Folienmaterials eine erste Vielzahl von Biosensor-Arbeitsflächen umfasst und der zweite Abschnitt des Folienmaterials eine zweite Vielzahl von Biosensor-Arbeitsflächen umfasst; und/oder (ii) die gegenüberliegende Bodenfläche Arbeitskomponenten beinhaltet.

14. Verfahren nach einem der vorhergehenden Ansprüche, wobei (i) der Bodenlaserschnitt eine breitere Fuge aufweist als der Arbeitsflächen-Laserschnitt und/oder (ii) der Bodenlaserstrahl relativ zu dem Arbeitsflächen-Laserstrahl gröber ist.

15. Biosensor-Teststreifen, umfassend ein geschlitztes Folienmaterial, das durch Schlitzen eines Folienmaterials unter Verwendung des Verfahrens nach einem der Ansprüche 1 bis 14 erhalten wird.

## Revendications

1. Procédé de refente d'un matériau de film polymère (10) d'une bande de test de biocapteur, le matériau de film comprenant une surface de travail (12) avec des éléments de travail (16, 18) et une surface de fond (14) opposée, comprenant :
le déplacement du matériau de film par rapport à un faisceau laser de surface de travail (28) dirigé contre la surface de travail du matériau de film ;
la réalisation d'une découpe laser de surface de travail du matériau de film en utilisant le faisceau laser de surface de travail ; et la séparation de la première partie du matériau de film de la seconde partie du matériau de film ;
**caractérisé en ce que** :
le déplacement du matériau de film est par rapport à un faisceau laser de fond (24) dirigé contre la surface de fond du matériau de film ;
le faisceau laser de surface de travail et le faisceau laser de fond sont fournis par des lasers séparés (22, 26), dans lequel le faisceau laser de fond est un faisceau laser CO₂ et le faisceau laser de surface de travail est un faisceau laser UV ;
le procédé comprend en outre la réalisation d'une découpe laser de fond de manière partielle dans la surface de fond du matériau de film jusqu'à une première profondeur en utilisant le faisceau laser de fond, la découpe laser de fond définissant des première et seconde parties du matériau de film sur des côtés opposés de la découpe laser de fond ;
la découpe laser de surface de travail du matériau de film est réalisée pour être alignée avec la découpe laser de fond ; dans lequel la découpe laser de surface de travail et la découpe laser de surface de fond se croisent ;
la découpe laser de fond est plus profonde que la découpe laser de surface de travail ; et
le faisceau laser de surface de travail fonctionne en se basant plus sur une photoablation du matériau d'entaille que sur une interaction thermique ; et le faisceau laser de surface de fond fonctionne en se basant plus sur une interaction thermique que sur une photoablation du matériau d'entaille.

2. Procédé selon la revendication 1 dans lequel la découpe laser de surface de travail a des ouvertures intermittentes qui se raccordent à la découpe laser de fond.

3. Procédé selon la revendication 2, dans lequel au moins une parmi la découpe laser de surface de travail et la découpe laser de fond est réalisée par impulsion laser intermittente.

4. Procédé selon l'une quelconque des revendications 1 à 3 dans lequel le faisceau laser de fond est positionné pour découper le matériau de film avant le faisceau laser de surface de travail, de telle sorte que la découpe laser de fond se produit avant la découpe laser de surface de travail.

5. Procédé selon l'une quelconque des revendications 1 à 4 dans lequel le faisceau laser de fond et les faisceaux laser de surface de travail sont stationnaires et le matériau de film est déplacé par rapport aux faisceaux laser stationnaires.

6. Procédé selon la revendication 5, comprenant l'orientation d'au moins un parmi le faisceau laser de surface de travail et le faisceau laser de fond par rapport aux éléments de travail du matériau de film.

7. Procédé selon l'une quelconque des revendications 1 à 6 dans lequel au moins un parmi le faisceau laser de fond et le faisceau laser de surface de travail est un faisceau de balayage.

8. Procédé selon l'une quelconque des revendications 1 à 7 dans lequel au moins un parmi le faisceau laser de fond et le faisceau laser de surface de travail est une partie d'un système à optique hybride ou volante.

9. Procédé selon l'une quelconque des revendications 1 à 8 dans lequel au moins un parmi le faisceau laser de fond et le faisceau laser de surface de travail comprend une pluralité de faisceaux laser réalisant une pluralité de découpes laser d'une profondeur d'entaille de plus en plus grande.

10. Procédé selon la revendication 9, dans lequel la réalisation des découpes laser de plus en plus grandes comprend l'utilisation de multiples systèmes laser.

11. Procédé selon la revendication 9, dans lequel la réalisation des découpes laser de plus en plus grandes comprend l'utilisation d'un laser unique ayant des faisceaux divisés.

12. Procédé selon l'une quelconque des revendications 1 à 11, dans lequel le faisceau laser de surface de travail est un faisceau laser UV PS.

13. Procédé selon l'une quelconque des revendications 1 à 12 dans lequel (i) la première partie du matériau de film comprend une première pluralité de surfaces de travail de biocapteur et la seconde partie du matériau de film comprend une seconde pluralité de surfaces de travail de biocapteur ; et/ou (ii) la surface de fond opposée comprend des éléments de travail.

14. Procédé selon l'une quelconque des revendications précédentes, dans lequel (i) la découpe laser de fond a une entaille plus large que la découpe laser de surface de travail et/ou (ii) le faisceau laser de fond est plus grossier que le faisceau laser de surface de travail.

15. Bande de test de biocapteur comprenant un matériau de film fendu obtenu par refente d'un matériau de film en utilisant le procédé selon l'une quelconque des revendications 1 à 14.
